## Europäisches Patentamt

## European Patent Office

## Office européen des brevets

(19)

(11) Veröffentlichungsnummer: **0 074 552**
**B1**

(12)

# EUROPÄISCHE PATENTSCHRIFT

(45) Veröffentlichungstag der Patentschrift:
**13.02.85**

(51) Int. Cl.⁴: **F 16 L 29/00, F 16 L 37/28**

(21) Anmeldenummer: **82107956.3**

(22) Anmeldetag: **30.08.82**

(54) Schlauch- oder Rohrkupplung.

(30) Priorität: 12.09.81 DE 3136309
06.02.82 DE 3204115

(43) Veröffentlichungstag der Anmeldung:
**23.03.83 Patentblatt 83/12**

(45) Bekanntmachung des Hinweises auf die Patenterteilung:
**13.02.85 Patentblatt 85/7**

(84) Benannte Vertragsstaaten:
**DE FR GB**

(56) Entgegenhaltungen:
**AT - B - 362 637**
**DE - C - 1 650 257**

(73) Patentinhaber: **Carl Kurt Walther GmbH & Co. KG,
Bahnstrasse 43-51, D-5600 Wuppertal 11 (DE)**

(72) Erfinder: **Momberg, Wolfgang, Magdalenenstrasse 50,
D-5600 Wuppertal 1 (DE)**

(74) Vertreter: **Rieder, Hans-Joachim, Dr. et al,
Corneliusstrasse 45 Postfach 11 04 51,
D-5600 Wuppertal 11 (DE)**

## Beschreibung

Die Erfindung betrifft eine Schlauch- oder Rohrkupplung großer Nennweite und für große zu überwindende Ventilkräfte mit einem selbstabschließenden Ventilkörper und einem in Schließrichtung des Ventils federbelasteten Ringkolben, der durch ein Druckmittel beaufschlagt diesen Ventilkörper von seinem Sitz abhebt, sowie einer Sperrkugelverriegelung mit einer Verriegelungshülse auf der einen Kupplungshälfte, wobei der Ringkolben unabhängig vom Durchflußmedium von außen über eine mittels Schnellkupplung ansteckbare Leitung mit einem Druckmittel beaufschlagt wird und ein Riegelglied vorgesehen ist, das die Verriegelungshülse in der Kupplungsstellung festlegt.

Eine derartige Schlauch- oder Rohrkupplung ist aus der DE-C-1 650 257 bekannt, und die Erfindung hat sich die Aufgabe gestellt, eine Schlauch- oder Rohrkupplung dieser Art so auszugestalten, daß unter Ausnutzung sowieso vorhandener Bauteile bei gleicher oder verbesserter Bedienungssicherheit die Verriegelung vereinfacht ist.

Gelöst wird diese Aufgabe dadurch, daß das Riegelglied von der lösbaren Kupplungshälfte der Druckmittelanschluß-Schnellkupplung gebildet ist, welche quergerichtet im Öffnungs-Verschiebeweg der Verriegelungshülse angeordnet ist, und daß die Verriegelungshülse in ihrer bei gelöster Kupplungshälfte der Druckmittelanschluß-Schnellkupplung erreichbaren Öffnungsstellung gegen Vortritt in ihre Kupplungsstellung durch eine Rasteinrichtung verrastet ist und die Rast beim Zusammenfügen der Schlauch- oder Rohrkupplung von einer Steuerfläche der anderen Kupplungshälfte der Schlauch- oder Rohrkupplung lösbar ist.

Zufolge derartiger Ausgestaltung ist eine gattungsgemäße Schlauch- oder Rohrkupplung von erhöhtem Gebrauchswert angegeben. Solange das von der einen Kupplungshälfte der Druckmittelanschluß-Schnellkupplung gebildete Riegelglied sich in Anschlußstellung befindet, kann die Verriegelungshülse nicht in eine Freigabestellung gebracht werden, die das Herausziehen der eingesteckten Kupplungshälfte ermöglicht. Ein Trennen der beiden Kupplungshälften ist erst nach Abnehmen der Kupplungshälfte der Druckmittelanschluß-Schnellkupplung möglich. Dann läßt sich die Verriegelungshülse um das erforderliche Maß verlagern. In der Öffnungsstellung verrastet anschließend die Verriegelungshülse und steht somit in einer Bereitschaftsstellung. In dieser Öffnungsstellung versperrt jedoch die Verriegelungshülse den Zutritt für die Kupplungshälfte der Druckmittelanschluß-Schnellkupplung. Erst nach Einstecken der einen Kupplungshälfte in die die Verriegelungshülse aufweisende Kupplungshälfte wird die Rast von der Steuerfläche der einzuschiebenden Kupplungshälfte ausgelöst. Danach gelangt die Verriegelungshülse federbeaufschlagt in ihre Grundstellung, womit sie den Weg zum Anschließen der Kupplungshälfte der Druckmittelanschluß-Schnellkupplung freigibt. Die Bedienung ist narrensicher. Fehlbetätigungen sind ausgeschlossen. Die Kupplungshälfte der Druckmittelanschluß-Schnellkupplung erfüllt somit eine Doppelfunktion, indem sie neben dem Druckmediumanschluß gleichzeitig eine Sperrfunktion verwirklicht.

Eine vorteilhafte Weiterbildung ist darin zu sehen, daß die Verriegelungshülse im Bereich ihres rückwärtigen, d. h. des der anderen Kupplungshälfte der Schlauch- oder Rohrkupplung abgewandten Randes eine Ausnehmung besitzt zum etwa formschlüssigen Eintritt der lösbaren Kupplungshälfte der Druckmittelanschluß-Schnellkupplung in der Kupplungsstellung der Verriegelungshülse. Die Ausnehmung ist so lang bemessen, daß die Verriegelungshülse noch um einen gewissen Betrag in Öffnungsrichtung verschoben werden kann. Dieses Maß reicht jedoch nicht aus, daß die Sperrkugeln die einsteckbare Kupplungshälfte freigeben. Die Ausnehmung verleiht der Kupplungshälfte der Druckmittelanschluß-Schnellkupplung zusätzlich eine vergrößerte Querstabilität. Außerdem ist bei Verwendung einer solchen druckmittelbetätigten Schlauch- oder Rohrkupplung die vorauszusetzende Narrensicherheit gegeben durch die in ihrer verrasteten Offenstellung das Zusammenfügen der Druckmittelanschluß-Schnellkupplung verhindernde Verriegelungshülse. Erst nach Herbeiführung der der Schlauch- oder Rohrkupplung und der damit zusammenhängenden räumlichen Verlagerung der Verriegelungshülse wird nach dem Zusammenfügen der Druckmittelanschluß-Schnellkupplung der Weg für das Druckmittel frei. Erst danach wird der Weg für das Durchflußmedium frei.

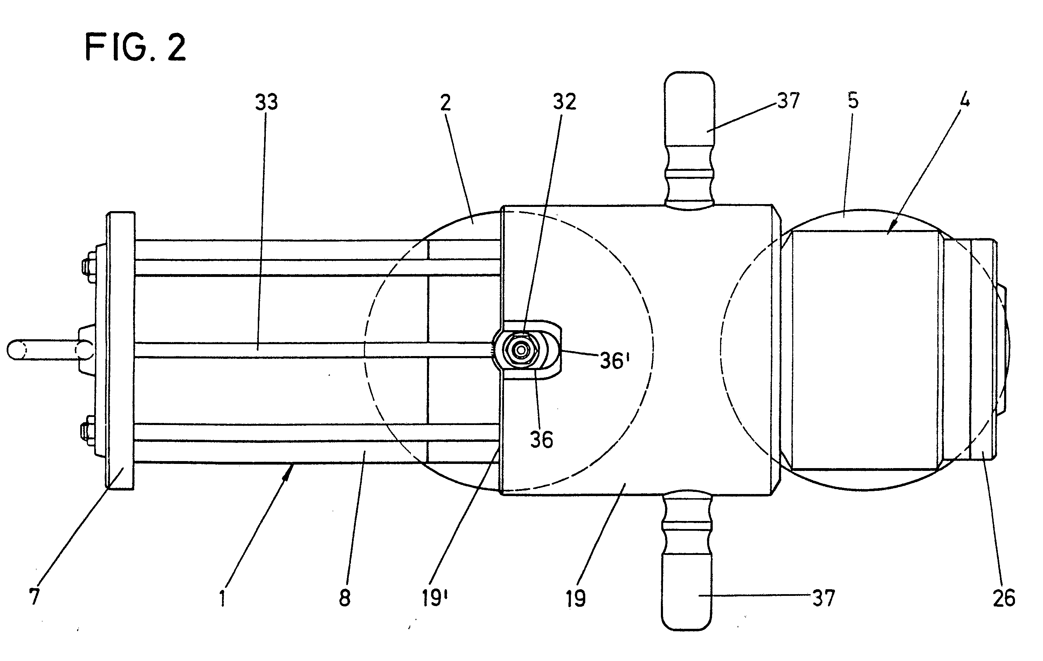

Nachstehend wird ein Ausführungsbeispiel der Erfindung anhand der Fig. 1 bis 4 erläutert. Es zeigt:

Fig. 1 teils in Ansicht, teils im Längsschnitt eine Schlauch- oder Rohrkupplung in Durchflußstellung,

Fig. 2 eine Draufsicht auf Fig. 1,

Fig. 3 eine Ansicht der zusammengesteckten Schlauch- oder Rohrkupplung mit angesetzter Kupplungshälfte der Druckmittelanschluß-Schnellkupplung, wobei die Verriegelungshülse bis zur von dieser Kupplungshälfte anschlagbegrenzten Stellung verschoben ist und

Fig. 4 teils in Ansicht, teils im Schnitt die getrennte Schlauch- oder Rohrkupplung.

Die Schlauch- oder Rohrkupplung besitzt eine fest anzuordnende Kupplungshälfte 1, von welcher quergerichtet ein einen Flansch 2 ausbildender Anschlußstutzen 3 ausgeht. Diese Kupplungshälfte 1 nimmt eine ansteckbare Kupplungshälfte 4 auf. Dieselbe ist ebenfalls mit einem quergerichteten, einen Flansch 5 aufweisenden Anschlußstutzen 6 versehen.

Im einzelnen besitzt die Kupplungshälfte 1 ein hülsenartiges, endseitig von einem Stopfen 7 verschlossenes Gehäuse 8. Letzteres nimmt einen verschiebbaren Ringkolben 9 auf, der seinerseits mit einem in der Längsmitte liegenden Ventilkörper 10 verbunden ist. Eine dem Ringkolben 9 zugeordnete Druckfeder 11 belastet diesen in Richtung des Stopfes 7, so daß bei keiner Druckmittelzufuhr der Ventilkörper mit seiner endständigen, schräg zur Längsmittelachse verlaufenden Dichtfläche 12 gegen eine ihr zugekehrte Dichtfläche 13 eines mit dem Gehäuse 8 verbundenen Einsatzes 14 tritt.

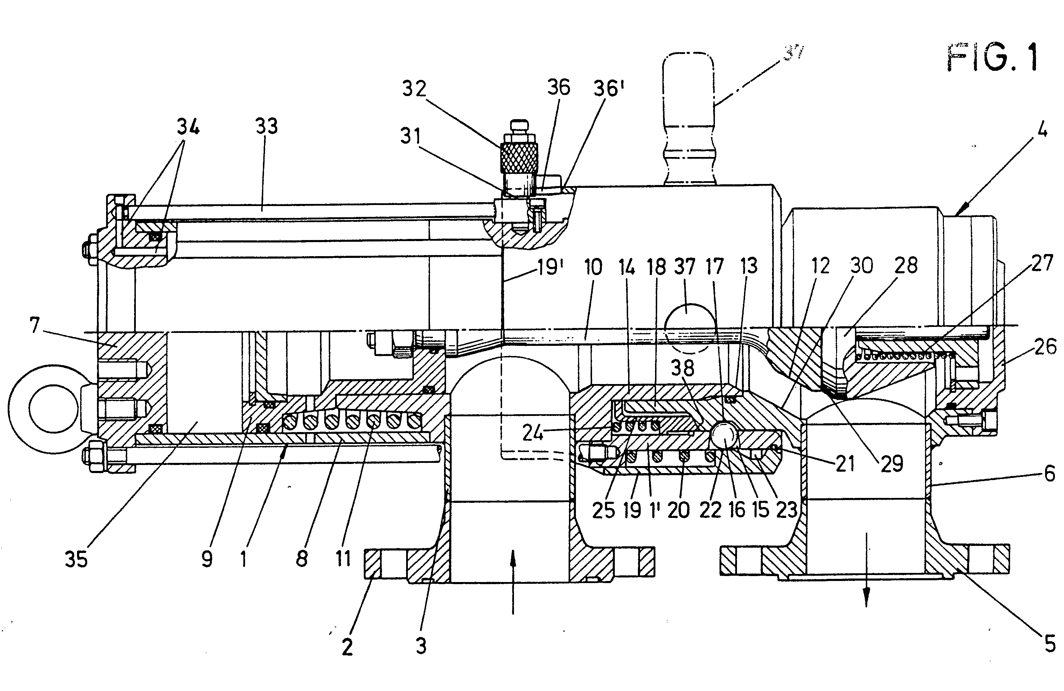

In dem dem Stopfen 7 gegenüberliegenden Gehäuseabschnitt 1' sind in konischen Radialbohrungen 15 Sperrkugeln 16 untergebracht, die ihrerseits in eine im Querschnitt trapezförmige Ringnut 17 eines Einsteckkragens 18 der Kupplungshälfte 4 eingreifen. Diese Eingriffsstellung wird aufrechterhalten von einer auf der Kupplungshälfte 1 verschiebbaren Verriegelungshülse 19, die ihrerseits von einer Druckfeder 20 in die in Fig. 1 veranschaulichte Grundstellung bewegt wird. Ein Anschlagring 21 des Gehäuseabschnitts 1' begrenzt diese Grundstellung.

Im Anschluß an die die Sperrkugeln 16 belastende Sperrfläche 22 bildet die Verriegelungshülse 19 eine im Querschnitt trapezförmige Ringnut 23 aus.

Im Bereich zwischen dem Einsatz 14 und dem Gehäuseabschnitt 1' ist eine von einer Druckfeder 24 in Richtung der Gehäusehälfte 4 belastete Sperrhülse 25 anschlagbegrenzt geführt. Bei eingesteckter Kupplungshälfte 4 umgibt die Sperrhülse 25 den stufenförmig abgesetzten Bereich des Einsteckkragens 18.

In der endseitig von einem Deckel 26 verschlossenen Kupplungshälfte 4 ist ein von einer Druckfeder 27 in Richtung der anderen Kupplungshälfte 1 federbelasteter Ventilkörper 28 geführt, dessen geneigt zur Längsmittelachse verlaufende Dichtfläche 29 mit einer innenseitigen Dichtfläche 30 des Einsteckkragens 18 zusammenwirkt.

In Gegenüberlage zum Anschlußstutzen 3 weist die Kupplungshälfte 1 quergerichtet die eine feststehende Kupplungshälfte 31 der Druckmittelanschluß-Schnellkupplung auf. Die andere Kupplungshälfte derselben trägt die Bezugsziffer 32. Über eine Leitung 33 und Kanäle 34 gelangt das Druckmittel in die zwischen Ringkolben 9 und Stopfen 7 befindliche Druckkammer 35.

Die lösbare Kupplungshälfte 32 der Druckmittelanschluß-Schnellkupplung ragt jedoch in den Verschiebeweg der Verriegelungshülse 19. Zu diesem Zweck formt die Verriegelungshülse 19 im Bereich ihres rückwärtigen Randes 19' eine randseitig verstärkte Ausnehmung 36 zum etwa formschlüssigen Eintritt der Kupplungshälfte 32.

Um eine Verschiebung der Verriegelungshülse 19 erleichtert vornehmen zu können, besitzt diese an ihrem Außenumfang zwei sich diametral gegenüberliegende Handgriffe 37.

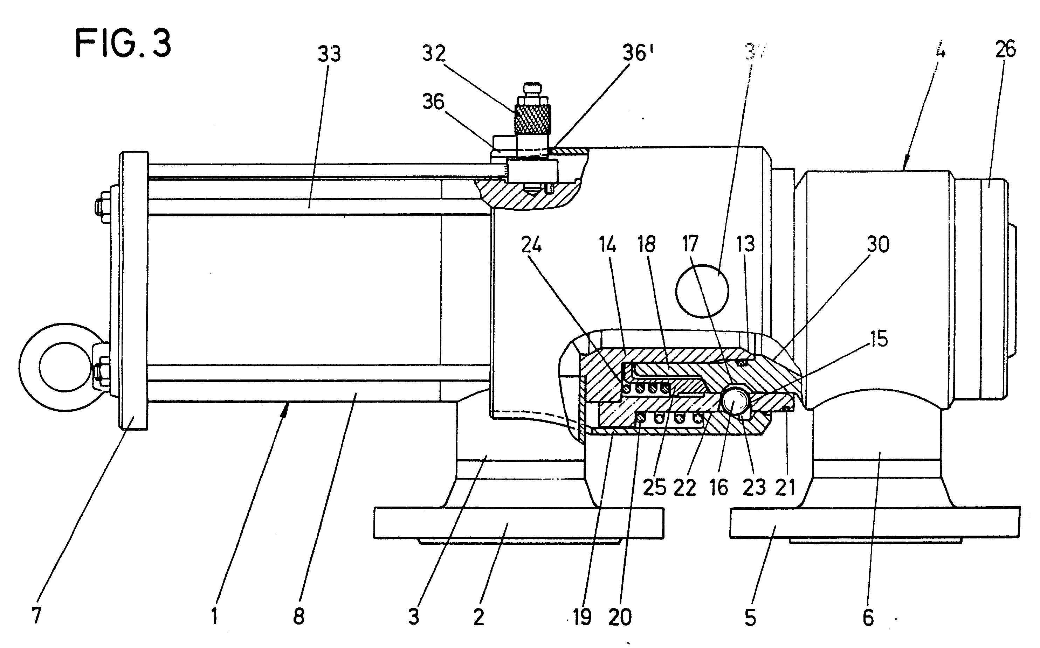

Es ergibt sich folgende Wirkungsweise: Gemäß Fig. 1 sind die beiden Kupplungshälften 1, 4 ineinandergesteckt. Die Schnellverschlußkupplung ist angebracht; das bedeutet, daß die Kupplungshälfte 32 derselben die Stellung gemäß Fig. 1 einnimmt. Das in die Druckmittelkammer 35 gelangende Druckmittel hat den Ringkolben 9 in Richtung der Kupplungshälfte 4 entgegen der Kraft der Druckfeder 11 verlagert. Der Ventilkörper 10 öffnet und verlagert gleichzeitig den federbeaufschlagten Ventilkörper 28 der Kupplungshälfte 4. Das Durchflußmedium kann somit vom Anschlußstutzen 3 unter Durchsetzen der Kupplungshälfte 1 zur anderen Kupplungshälfte 4 gelangen und von dort über den quergerichteten Anschlußstutzen 6 in einen Tank oder dergleichen weiterfließen. Aus dieser in Fig. 1 dargestellten Lage ist ein Trennen der Schlauch- oder Rohrkupplung nicht möglich. Ein solcher Trennversuch ist in Fig. 3 dargestellt, wobei die Verriegelungshülse 19 in Richtung ihrer Öffnungsstellung geschoben ist. Jedoch wird der Verschiebeweg begrenzt durch die Kupplungshälfte 32 der Druckmittelanschluß-Schnellkupplung derart, daß die Randkante 36' der Ausnehmung 36 gegen die Kupplungshälfte 32 stößt. Die Sperrkugeln 16 können somit nicht in die Ringnut 23 der Verriegelungshülse 19 ausweichen und verbleiben somit noch zum Teil in der Ringnut 17 des Kragens 18 der anderen Kupplungshälfte 4. Nach Loslassen der Verriegelungshülse 19 bringt die Druckfeder 20 dieselbe in ihre in Fig. 1 veranschaulichte Grundstellung zurück.

Wird die Druckmittelzufuhr abgestellt, kann die Schlauch- oder Rohrkupplung ebenfalls nicht getrennt werden. In einer solchen, nicht veranschaulichten Stellung bringt die Druckfeder 11 den Ringkolben 9 und damit den Ventilkörper 10 in eine Sperrstellung. Gleichzeitig tritt der Ventilkörper 28 in Dichtungsstellung zur korrespondierenden Dichtungsfläche 30.

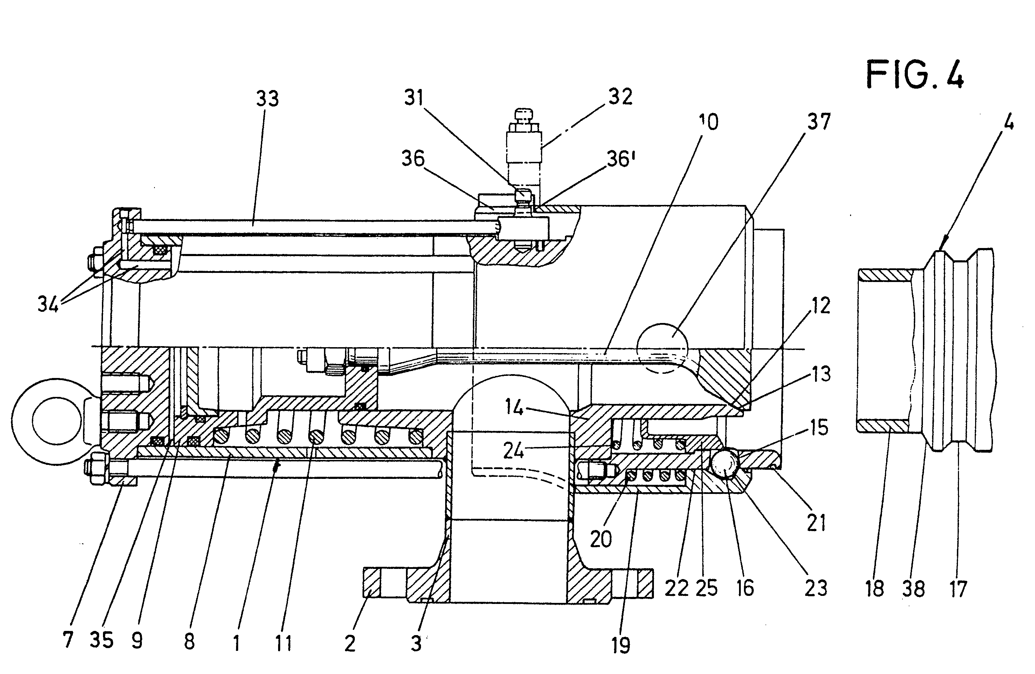

Ein Trennen der Kupplungshälften 1, 4 ist erst dann durchführbar, wenn die Kupplungshälfte 32 der Druckmittelanschluß-Schnellkupplung 32 abgezogen wird. Dann ist der Verschiebeweg der Verriegelungshülse 19 in ihre Öffnungsstellung ausreichend groß, daß die Sperrkugeln 16 in die Ringnut 23 der Verriegelungshülse 19 eintauchen können unter Freigabe der Kupplungshälfte 4. Durch Abziehen derselben kann sich die Sperrhülse 25 anschlagbegrenzt in die in Fig. 4 veranschaulichte Stellung bewegen, wobei sie mit ihrem Ende die Sperrkugeln 16 in ihrer Lage und damit die Verriegelungshülse fixiert. In dieser in Fig. 4 veranschaulichten Stellung ist das Anstecken der Kupplungshälfte 32 der Druckmittelanschluß-Schnellkupplung an den Stutzen 31 nicht möglich, da der jenseits der Randkante 36' liegende Bereich zufolge der vorverlagerten Verriegelungshülse 19 den Zutritt für die Kupplungshälfte 32 versperrt. Der Ventilkörper 10 kann daher durch Fehlbetätigung nicht aus seiner Sperrstellung gemäß Fig. 4 gelangen.

Das Anstecken der Kupplungshälfte 32 der Druckmittelanschluß-Schnellkupplung setzt das Zusammenfügen der Kupplungshälften 1, 4 voraus, wobei in der Endphase der Einsteckbewegung durch eine dem Einsteckkragen 18 nachgeordnete Steuerfläche 38 die Sperrhülse 25 beaufschlagt wird, die ihrerseits die Sperrkugeln 16 zum Eintritt in die Ringnut 17 der Kupplungshälfte 4 freigibt, woran anschließend über die Druckfeder 20 die Verlagerung der Verriegelungshülse 19 in ihre Grundstellung gemäß Fig. 1 erfolgen kann. Dann ist erst der Zugang für die das Riegelglied darstellende Kupplungshälfte 32 der Druckmittelanschluß-Schnellkupplung frei.

**Patentansprüche**

1. Schlauch- oder Rohrkupplung (1, 4) großer Nennweite und für große zu überwindende Ventilkräfte mit einem selbstabschließenden Ventilkörper (10) und einem in Schließrichtung des Ventils federbelasteten Ringkolben (9), der durch ein Druckmittel beaufschlagt diesen Ventilkörper (10) von seinem Sitz (30) abhebt, sowie einer Sperrkugelverriegelung (15—23) mit einer Verriegelungshülse (19) auf der einen Kupplungshälfte (1), wobei der Ringkolben (9) unabhängig vom Durchflußmedium von außen über eine mittels Schnellkupplung (31, 32) ansteckbare Leitung mit einem Druckmittel beaufschlagt wird und ein Riegelglied (32) vorgesehen ist, das die Verriegelungshülse (19) in der Kupplungsstellung festlegt, dadurch gekennzeichnet, daß das Riegelglied von der lösbaren Kupplungshälfte (32) der Druckmittelanschluß-Schnellkupplung (31, 32) gebildet ist, welche quergerichtet im Öffnungs-Verschiebeweg der Verriegelungshülse (19) angeordnet ist, und daß die Verriegelungshülse (19) in ihrer bei gelöster Kupplungshälfte (32) der Druckmittelanschluß-Schnellkupplung erreichbaren Öffnungsstellung (Fig. 4) gegen Vortritt in ihre Kupplungsstellung durch eine Rasteinrichtung (16, 23, 24, 25) verrastet ist und die Rast beim Zusammenfügen der Schlauch- oder Rohrkupplung (1, 4) von einer Steuerfläche (38) der anderen Kupplungshälfte (4) der Schlauch- oder Rohrkupplung (1, 4) lösbar ist.

2. Schlauch- oder Rohrkupplung nach Anspruch 1, dadurch gekennzeichnet, daß die Verriegelungshülse (19) im Bereich ihres rückwärtigen d. h. des der anderen Kupplungshälfte (4) der Schlauch- oder Rohrkupplung (1, 4) abgewandten Randes (19') eine Ausnehmung (36) besitzt zum etwa formschlüssigen Eintritt der lösbaren Kupplungshälfte (32) der Druckmittelanschluß-Schnellkupplung (31, 32) in der Kupplungsstellung der Verriegelungshülse (19).

3. Verwendung einer druckmittelbetätigten Schlauch- oder Rohrkupplung gemäß Anspruch 1 oder 2 mit einer in ihrer verrasteten Offenstellung (Fig. 4) das Zusammenfügen der Druckmittelanschluß-Schnellkupplung (31, 32) verhindernden Verriegelungshülse (19) zum Betanken von Gastanks an Kraftfahrzeugen.

**Claims**

1. A hose or pipe coupling (1, 4) of large nominal width and for valve forces which are heavy to overcome and having a self-closing valve body (10) and an annular piston (9) which is springloaded in the direction to close the valve and which when acted upon by a pressure medium lifts this valve body (10) off its seat (30), as well as having a ball catch locking mechanism (15—23) having a locking sleeve (19) on the one half-coupling (1), where the annular piston (9), independently of the medium flowing through, is acted upon by a pressure medium from outside via a lead which can be plugged in by means of a rapid action coupling (31, 32), and a bolt member (32) is provided, which secures the locking sleeve (19) in the coupled position, characterized in that the bolt member is formed by the detachable half-coupling (32) of the rapid action coupling (31, 32) for the pressure medium connection, which is arranged directed transversely to the path of displacement of the locking sleeve (19) upon opening, and that the locking sleeve (19) in its opened position (Figure 4) which can be achieved with the half-coupling (32) of the rapid action coupling for the pressure medium connection released, is located against advance into its coupled position by a catch device (16, 23, 24, 25) and upon uniting the hose or pipe coupling (1, 4) the catch can be released by a control surface (38) on the other half-coupling (4) of the hose or pipe coupling (1, 4).

2. A hose or pipe coupling as in Claim 1, characterized in that the locking sleeve (19) in the region of its rear edge (19'), i. e., of the edge remote from the other half-coupling (4) of the hose or pipe coupling (1, 4), has a recess (36) for the nearly positive entry of the detachable half-coupling (32) of the rapid action coupling (31, 32) for the pressure medium connection, in the coupled position of the locking sleeve (19).

3. The employment of a pressure-medium-actuated hose or pipe coupling as in Claim 1 or 2, having a locking sleeve (19) which in its located open position (Figure 4) prevents the uniting of the rapid action coupling (31, 32) for the pressure medium connection, for the filling up of gas tanks on motor vehicles.

**Revendications**

1. Dispositif d'accouplement (1, 4) de tuyaux souples ou de tubes, de grande section de passage, et pour des efforts importants à surmonter sur une soupape, avec un corps de soupape (10) se fermant de lui-même et un piston annulaire (9) sollicité par un ressort dans le sens de fermeture de la soupape et qui, sous l'action d'un fluide sous pression, soulève ce corps de soupape (10) de son siège (30), ainsi qu'avec un verrouillage par des billes de blocage (15—23) avec une douille de verrouillage (19) sur l'une (1) des moitiés du dispositif d'accouplement, ce-pendant que le piston annulaire (9), indépendamment du fluide tranversant le dispositif d'accouplement, est sollicité à partir de l'extérieur par un fluide sous pression par l'intermédiaire d'une canalisation susceptible d'être raccordée au moyen d'un dispositif d'accouplement rapide (31, 32), un organe de verrouillage (32) étant prévu qui maintient la douille de verrouillage (19) dans la position d'accouplement, dispositif d'accouplement caractérisé en ce que l'organe de verrouillage est constitué par la moitié amovible (32) du dispositif d'accouplement rapide (31, 32) pour le raccordement du fluide sous pression, cette moitié amovible étant disposée transversalement sur le trajet de déplacement de la douille de verrouillage (19) vers son ouverture, tandis que la douille de verrouillage (19) dans sa position d'ouverture susceptible d'être atteinte lorsque la moitié amovible (32) du dispositif d'accouplement rapide pour le raccordement du fluide sous pression a été enlevée (figure 4), est empêchée de se déplacer dans sa position d'accouplement par un dispositif d'arrêt (16, 23, 24, 25), et ce dispositif d'arrêt, lors de l'assemblage du dispositif d'accouplement (1, 4) de tuyaux souples ou de tubes, étant susceptible d'être libéré par une surface de commande (38) de l'autre moitié (4) du dispositif d'accouplement (1, 4) de tuyaux souples ou de tubes.

2. Dispositif d'accouplement de tuyaux souples ou de tubes selon la revendication 1, caractérisé en ce que la douille de verrouillage (19), au voisinage de son bord arrière (19'), c'est-à-dire son bord opposé à l'autre moitié (4) du dispositif d'accouplement (1, 4) de tuyaux souples ou de tubes, comporte une encoche (36) pour l'entrée éventuelle avec interpénétration de formes de la moitié amovible (32) du dispositif d'accouplement rapide (31, 32) pour le raccordement du fluide sous pression, lorsque la douille de verrouillage (19) est dans sa position d'accouplement.

3. Mise en oeuvre pour le remplissage de réservoir à gaz sur des véhicules automobiles, d'un dispositif d'accouplement de tuyaux souples ou de tubes, actionné par un fluide sous pression, et comportant une douille de verrouillage (19) qui, lorsqu'elle est enclenchée dans sa position d'ouverture (figure 4), empêche l'assemblage du dispositif d'accouplement rapide (31, 32) pour le raccordement du fluide sous pression selon revendication 1 ou 2.

FIG.1

# FIG. 2

# FIG. 3

0 074 552

FIG. 4

0 074 552